# EUROPEAN PATENT SPECIFICATION

(11) **EP 1 437 295 B1**
(45) Date of publication and mention of the grant of the patent: **28.02.2007**
(21) Application number: 03250073.8
(22) Date of filing: 07.01.2003
(51) Int. Cl.: B62L 1/14, B62J 6/04, B62J 6/00

(54) **Brake pad assembly for a bicycle**
Bremsbelagbaugruppe für ein Fahrrad
Ensemble de garniture de frein pour une bicyclette

(43) Date of publication of application: 14.07.2004
(73) Proprietor: Lin, Ah-Ping, Shih-Pei Li, Changhua City (TW)
(72) Inventor: Wang, Kuo-Hsin, Fen-Yuan Hsiang, Chang-Hua Hsien (TW)
(74) Representative: Jacob, Reuben Ellis

(56) References cited:
- DE-U- 29 603 968
- DE-U- 29 712 687
- US-A- 3 188 418
- US-A- 3 906 443

## Description

The present invention relates to a brake pad assembly, more particularly to a brake pad assembly for a bicycle.

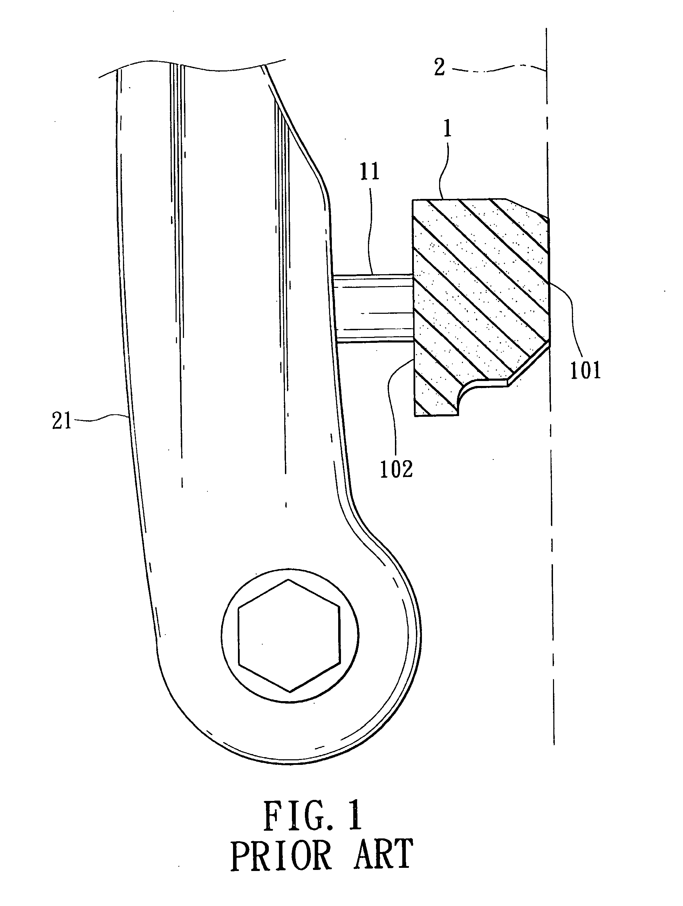

Referring to Figure 1, a conventional brake pad assembly is shown to include an elastic brake pad body 1 having a braking face 101 and a mounting face 102 that is opposite to the braking face 101 and that is mounted on a brake caliper 21 of a bicycle (not shown) via a mounting rod 11. The brake pad body 1 is elastically deformable when compressed by a wheel rim 2 of the bicycle during a braking operation.

The conventional brake pad assembly is disadvantageous in that it does not provide any warning during braking operation of the bicycle for avoiding occurrence of accidents.

US-A-3188418 describes brake light for bicycles with brake light switch means. A light bulb is located at the back of the bicycle, which is lit as the brakes are applied and current flows from a battery through a wire and the bicycle to said light bulb.

Therefore, the object of this invention is to provide a brake pad assembly which includes a light emitting member mounted on an exterior of an elastic elongated pad body, and a battery disposed in the pad body and electrically coupled to the light emitting member such that the light emitting member is activated to emit a warning light upon a braking operation.

Accordingly, a brake pad assembly of the present invention includes: an elastic elongated pad body having a braking face and a mounting face opposite to the braking face, the mounting face being formed with a battery-receiving recess, the pad body being elastically deformable when compressed by a wheel rim of the bicycle during a braking operation; a battery received in the battery-receiving recess, and having a positive electrode adjacent to the mounting face and a negative electrode opposite to the positive electrode; a light emitting member mounted on an exterior of the pad body, and including first and second spring terminals extending therefrom into the battery-receiving recess in such a manner that the first spring terminal constantly abuts against the positive electrode and that the second spring terminal confronts and is spaced apart from the negative electrode; and a pushing member formed in the pad body, extending in a transverse direction relative to the braking and mounting faces toward the second spring terminal, and being elastically deformable so as to move in the transverse direction and to push the second spring terminal to move toward and to abut against the negative electrode upon deformation of the pad body when the braking face is compressed by the wheel rim during the braking operation, thereby activating the light emitting member to emit a warning light.

Other features and advantages of this invention will become more apparent in the following detailed description of the preferred embodiment of this invention, with reference to the accompanying drawings, in which:
Figure 1 is a sectional view of a conventional brake pad assembly when mounted on a brake caliper of a bicycle;
Figure 2 is a perspective view of the preferred embodiment of a brake pad assembly according to the present invention, which is mounted on a brake caliper of a bicycle;
Figure 3 is a partly exploded perspective view of the preferred embodiment;
Figure 4 is a sectional view of the preferred embodiment when mounted on the brake caliper of the bicycle, illustrating a state prior to a braking operation; and
Figure 5 is a sectional view of the preferred embodiment when mounted on the brake caliper of the bicycle, illustrating a state during the braking operation.

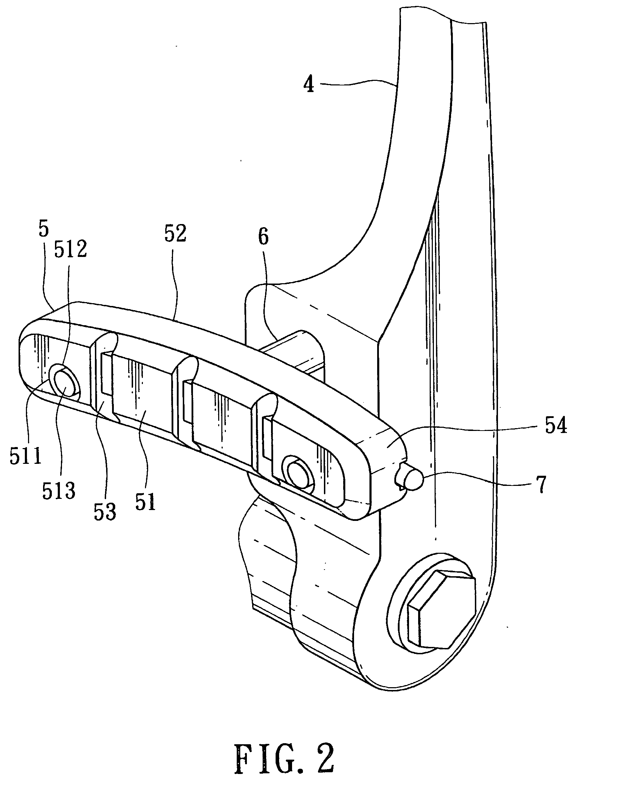

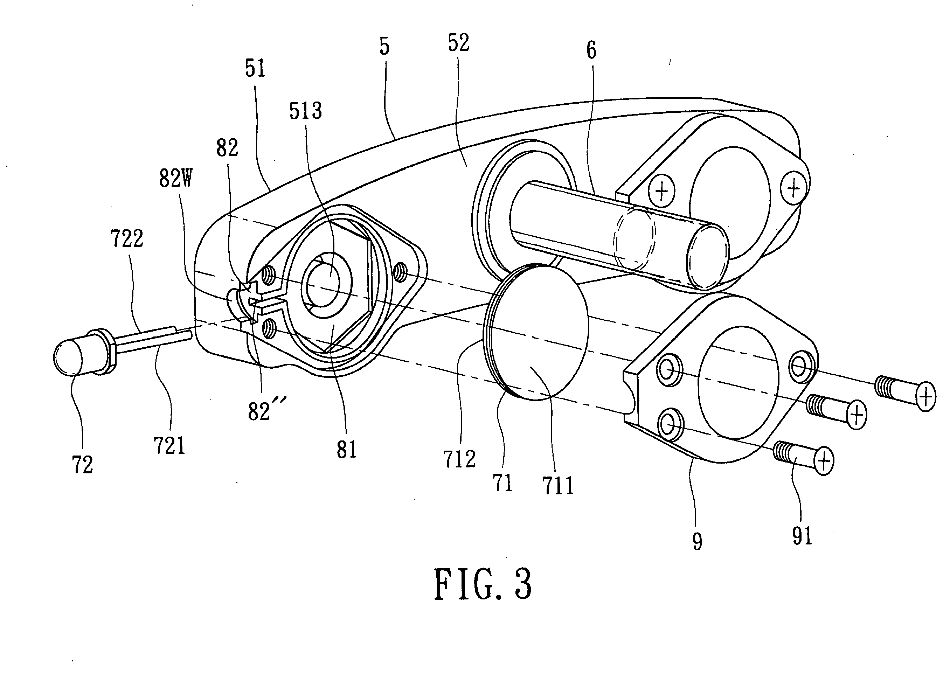

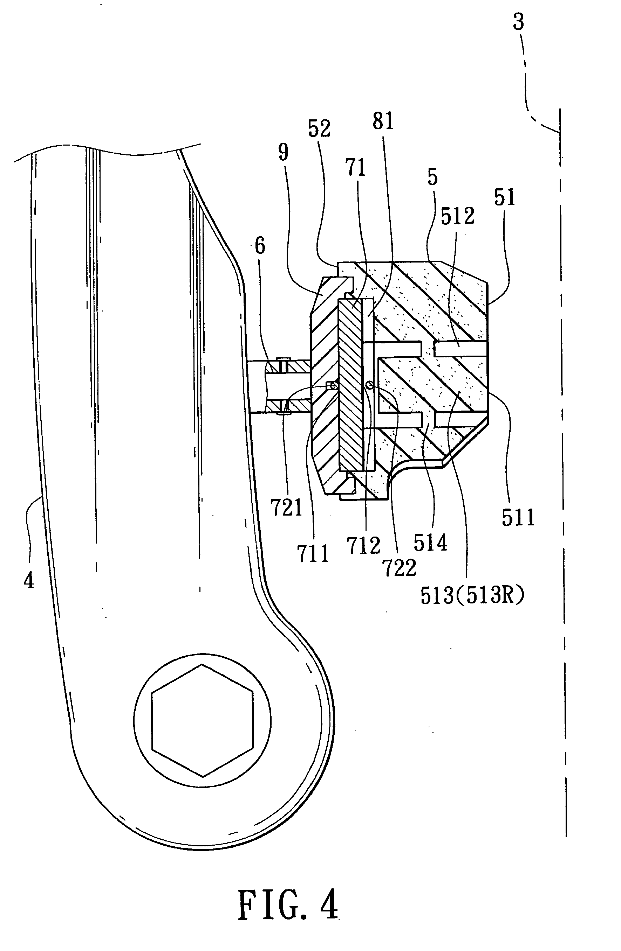

Referring to Figures 2, 3 and 4, the preferred embodiment of a brake pad assembly for a bicycle according to the present invention is shown to include an elastic elongated pad body 5, two batteries 71, two spaced apart light emitting members 7, and two pushing members 513.

As illustrated, the elongated pad body 5 has two opposite ends 54, a braking face 51, and a mounting face 52 opposite to the braking face 51. The mounting face 52 of the pad body 5 is formed with two battery-receiving recesses 81 that are respectively disposed adjacent to the opposite ends 54, and three grooves 53 that are disposed between the battery-receiving recesses 81 for providing suitable spaces to accommodate thermal expansion of the pad body 5 during a braking operation.

The batteries 71 are respectively received in the battery-receiving recesses 81. Each of the batteries 71 has a positive electrode 711 adjacent to the mounting face 52 and a negative electrode 712 opposite to the positive electrode 711.

The light emitting members 7 are mounted on an exterior of the pad body 5 adjacent respectively to the opposite ends 54 of the pad body 5. Each of the light emitting members 7 includes a bulb 72 having first and second spring terminals 721,722, each of which extends therefrom into a respective one of the battery-receiving recesses 81 in such a manner that the first spring terminal 721 constantly abuts against the positive electrode 711 of a respective one of the batteries 71 and that the second spring terminal 722 confronts and is spaced apart from the negative electrode 712 of the respective one of the batteries 71.

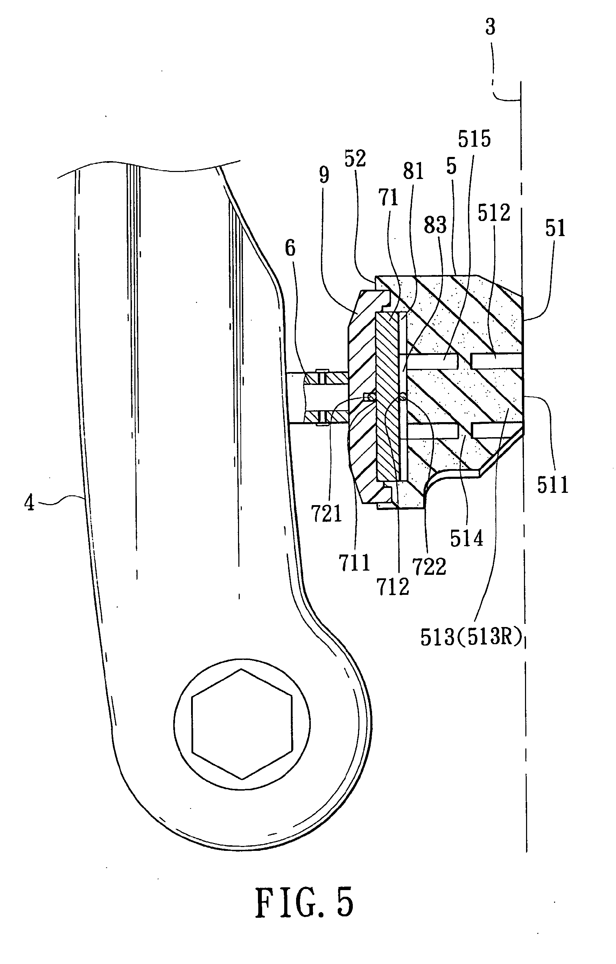

The pushing members 513 are formed in the pad body 5. Each of the pushing members 513 extends in a transverse direction relative to the braking and mounting faces 51, 52 toward the second spring terminal 722 of a respective one the light emitting members 7. Each pushing member 513 is elastically deformable so as to move in the transverse direction and to push the second spring terminal 722 of the respective one of the light emitting members 7 to move toward and to abut against the negative electrode 712 of the respective one of the batteries 71 upon deformation of the pad body 5 when the braking face 51 of the pad body 5 is compressed by a wheel rim 3 of a bicycle (not shown) during the braking operation, as best shown in Figure 5, thereby activating the light emitting member 7 to send out warning lights.

In this preferred embodiment, the pad body 5 is formed with two spaced apart through-holes 511. Each of the through-holes 511 is confined by a hole-defining wall 512 that extends in the transverse direction from the braking face 51 to the respective battery-receiving recess 81. Each of the pushing members 513 includes a pushing rod 513R and an annular flange 514. The pushing rod 513R is disposed in a respective one of the through-holes 511, is radially spaced apart from the hole-defining wall 512, and extends from the braking face 51 to the respective battery-receiving recess 81. The annular flange 514 extends radially and outwardly from the pushing rod 513R to connect with the respective one of the hole-defining walls 512 so as to permit displacement of the pushing rod 513R toward the second spring terminal 722 upon the braking operation.

Preferably, each of the opposite ends 54 of the pad body 5 is formed with a bulb-receiving recess 82 to permit seating of the bulb 72 of a respective one of the light emitting members 7 therein. The bulb-receiving recess 82 is confined by a recess-defining wall 82W that has a bottom wall portion formed with a terminal extension passage 82" which is in spatial communication with the respective battery-receiving recess 81. The first and second spring terminal 721, 722 of the bulb 72 of a respective one of the light emitting members 7 extend through the terminal extension passage 82" and into the respective battery-receiving recess 81.

Two shielding plates 9 are mounted on the mounting face 52 of the pad body 5 by the use of a plurality of screws 91 so as to cover the battery-receiving recesses 81, respectively. A mounting rod 6 is secured to the mounting face 52 of the pad body 5 at a middle portion of the pad body 5 for coupling with a brake caliper 4 of the bicycle (not shown).

With the inclusion of the light emitting members 7 and the batteries 71, the aforethe disadvantage associated with the prior art can be eliminated.

## Claims

1. A brake pad assembly for a bicycle with a wheel rim (3), the brake pad assembly comprising :
an elastic elongated pad body (5) having a braking face (51), and a mounting face (52) opposite to the braking face (51), the mounting face (52) being formed with a battery-receiving recess (81) , the pad body (5) being elastically deformable when compressed by the wheel rim (3) during a braking operation;
a battery (71) received in the battery-receiving recess (81), and having a positive electrode (711) adjacent to the mounting face (52) and a negative electrode (712) opposite to the positive electrode (711);
a light emitting member (7) mounted on an exterior of the pad body (5), and including first and second spring terminals (721,722) extending therefrom into the battery-receiving recess (81) in such a manner that the first spring terminal (721) constantly abuts against the positive electrode (711) and that the second spring terminal (722) confronts with and is spaced apart from the negative electrode (712); and
a pushing member (513) formed in the pad body (5), extending in a transverse direction relative to the braking and mounting faces (51,52) toward the second spring terminal (722), and being elastically deformable so as to move in the transverse direction and to push the second spring terminal 722 to move toward and to abut against the negative electrode (712) upon deformation of the pad body (5) when the braking face (51) is compressed by the wheel rim (3) during the braking operation, thereby activating the light emitting member (7) to emit a warning light.

2. The brake pad assembly as defined in Claim 1, whereby the pad body (5) is formed with a through-hole (511) that is confined by a hole-defining wall (512) and that extends in the transverse direction from the braking face (51) to the battery-receiving recess (81), the pushing member (513) including a pushing rod (513R) that is disposed in the through-hole (511) , that is radially spaced apart from the hole-defining wall (512) , and that extends from the braking face (51) to the battery-receiving recess (81), and an annular flange (514) extending radially and outwardly from the pushing rod (513R) to connect with the hole-defining wall (512) so as to permit displacement of the pushing rod (513R) toward the second spring terminal (722) upon the braking operation.

## Patentansprüche

1. Bremsklotzbaugruppe für ein Fahrrad mit einer Radfelge (3), wobei die Bremsklotzbaugruppe Folgendes umfasst:
einen elastischen länglichen Klotzkörper (5) mit einer Bremsfläche (51) und einer Montagefläche (52), die der Bremsfläche (51) gegenüberliegt, wobei die Montagefläche (52) mit einem Batteriefach (81) ausgebildet ist, wobei der Klotzkörper (5) elastisch verformbar ist, wenn er während eines Bremsvorgangs durch die Radfelge (3) zusammengedrückt wird;
eine Batterie (71), die in dem Batteriefach (81) aufgenommen ist und eine positive Elektrode (711) neben der Montagefläche (52) und eine negative Elektrode (712) gegenüber der positiven Elektrode (711) aufweist;
ein Licht aussendendes Element (7), das auf einer Außenseite des Klotzkörpers (5) installiert ist und einen ersten und einen zweiten Federanschluss (721, 722) enthält, die sich von dort dergestalt in das Batteriefach (81) hinein erstrecken, dass der erste Federanschluss (721) dauerhaft gegen die positive Elektrode (711) stößt und dass der zweite Federanschluss (722) der negativen Elektrode (712) gegenüberliegt und von ihr beabstandet ist; und
ein Drückelement (513), das in dem Klotzkörper (5) ausgebildet ist und sich quer zu der Brems- und der Montagefläche (51, 52) in Richtung des zweiten Federanschlusses (722) erstreckt und elastisch dergestalt verformt werden kann, dass es sich in der Querrichtung bewegt und so gegen den zweiten Federanschluss (722) drückt, dass dieser sich zu der negativen Elektrode (712) hin bewegt und gegen diese stößt, sobald sich der Klotzkörper (5) verformt, wenn die Bremsfläche (51) während eines Bremsvorgangs durch die Radfelge (3) zusammengedrückt wird, wodurch das Licht aussendende Element (7) aktiviert wird, um ein Warnlicht auszusenden.

2. Bremsklotzbaugruppe nach Anspruch 1, wobei in dem Klotzkörper (5) ein Durchgangsloch (511) ausgebildet ist, das durch eine lochdefinierende Wand (512) begrenzt ist und das sich in der Querrichtung von der Bremsfläche (51) zu dem Batteriefach (81) erstreckt, wobei das Drückelement (513) eine Schubstange (513R) enthält, die in dem Durchgangsloch (511) angeordnet ist und radial von der lochdefinierenden Wand (512) beabstandet ist und sich von der Bremsfläche (51) zu dem Batteriefach (81) erstreckt, und einen ringförmigen Flansch (514) enthält, der sich von der Schubstange (513R) dergestalt radial und auswärts erstreckt, dass er mit der lochdefinierenden Wand (512) so verbunden ist, dass bei Einsetzen des Bremsvorgangs eine Verschiebung der Schubstange (513R) in Richtung des zweiten Federanschlusses (722) möglich ist.

## Revendications

1. Ensemble de garniture de frein pour une bicyclette dotée d'une jante (3), l'ensemble de garniture de frein comprenant:
un corps de garniture élastique de forme allongée (5) possédant une face de freinage (51), et une face de montage (52) opposée à la face de freinage (51), la face de montage (52) étant formée avec un évidement pour recevoir une batterie (81), le corps de garniture (5) étant déformable élastiquement lorsqu'il est comprimé par la jante (3) pendant une opération de freinage ;
une batterie (71) logée dans l'évidement de réception de la batterie (81), et possédant une électrode positive (711) adjacente à la face de montage (52) et une électrode négative (712) opposée à l'électrode positive (711) ;
un élément émetteur de lumière (7) monté sur l'extérieur du corps de garniture (5), et comportant des première et seconde bornes à ressort (721, 722) s'étendant à partir de lui dans l'évidement destiné au logement de batterie (81) d'une manière telle que la première borne à ressort (721) bute constamment contre l'électrode positive (711) et que la seconde borne à ressort (722) fait face à, et est distante de, l'électrode négative (712) ; et
un élément poussoir (513) formé dans le corps de garniture (5), s'étendant dans une direction transversale par rapport aux faces de freinage et de montage (51, 52) vers la second borne à ressort (722), et pouvant être déformée élastiquement de façon à se déplacer suivant la direction transverse et à pousser la seconde borne à ressort (722) pour se déplacer vers, et à buter contre, l'électrode négative (712) lors de la déformation du corps de garniture (5) lorsque la face de freinage (51) est comprimée par la jante (3) pendant l'opération de freinage, de façon à activer l'élément émetteur de lumière (7) pour émettre une lumière d'avertissement.

2. Ensemble de garniture de frein selon la revendication 1, tel que le corps de garniture (5) est formé avec un trou de passage (511) qui est limité par une paroi délimitant le trou (512) et qui s'étend dans la direction transverse à partir de la face de freinage (51) vers l'évidement destiné au logement de la batterie (81), l'élément poussoir (513) comportant une tige de poussée (513R) qui est disposée dans le trou de passage (511), qui est distante radialement de la paroi délimitant le trou (512), et qui s'étend de la face de freinage (51) à l'évidement destiné au logement de la batterie (81), et un rebord annulaire (514) s'étendant radialement et vers l'extérieur à partir de la tige de poussée (513R) pour se connecter avec la paroi délimitant le trou (512) de façon à permettre un déplacement de la tige de poussée (513R) vers la seconde borne à ressort (722) lors de l'opération de freinage.
